(19) Europäisches Patentamt / European Patent Office / Office européen des brevets

(11) **EP 1 750 428 A2**

(12) **EUROPEAN PATENT APPLICATION**

(43) Date of publication:
**07.02.2007 Bulletin 2007/06**

(51) Int Cl.:
***H04N 1/60*** ^(2006.01)

(21) Application number: **06005882.3**

(22) Date of filing: **22.03.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventors:<br>• **Ajito, Takeyuki**<br> **Hachioji City**<br> **Tokyo (JP)**<br>• **Komiya, Yasuhiro**<br> **Hino-City**<br> **Tokyo (JP)** |
| (30) Priority: **01.08.2005 JP 2005222784** | (74) Representative: **von Hellfeld, Axel**<br>**Wuesthoff & Wuesthoff** |
| (71) Applicant: **Olympus Corporation**<br>**Shibuya-ku, Tokyo (JP)** | **Patent- und Rechtsanwälte**<br>**Schweigerstrasse 2**<br>**81541 München (DE)** |

(54) **Illumination environment reproducing system**

(57)   An illumination environment reproducing system for illuminating an object (14) to be observed by an observer (15) or captured by a capturing device (16), under a desired illumination environment. The system includes an illumination environment projection device (12) for projecting a light distribution of the illumination environment as an image. A diffusion screen (13) is arranged to cover at least an upper portion of the object (14), for illuminating the object (14) by a diffusion reflection or diffusion transmission of the illumination environment projected by the projection device (12).

*FIG. 1*

**Description**

TECHNICAL FIELD

The present invention relates to an illumination environment reproducing system, which can be used for reproducing a desired illumination environment upon observation or capturing of an object.

RELATED ART

In the field of industrial design, for example, the color of a product is checked and evaluated under various illumination environments upon color designing. Conventionally, color check or color evaluation is performed with respect to certain number of prototype models of the product, which have been prepared in accordance with a preliminary design, under a virtual illumination environment supposed for actual use of the product. Particularly with respect to the products for use in the open air, in view of the difficulty for actually taking out the models in the open air, an illumination device and an illumination reflector, etc., are often used indoors so as to reproduce the open air illumination environment. Further, photographs are often taken in a studio by reproducing the open air illumination environment, not only upon the color designing, but also upon capturing an image of the product for catalogs or brochures.

However, even if it is attempted to reproduce the illumination environment of the open air natural light in a studio, from a practical viewpoint, it is very difficult to accurately reproduce the open air illumination environment. This is because (1) the emitted color light of the illumination device and the reflected light of the illumination reflector are different, in terms of spectrum, from the natural light, (2) the illumination having a spatial distribution, such as that by an open air natural light, cannot be reproduced solely by the reflected light of the illumination reflector, and (3) reflection of the open air surroundings of the object, such as buildings, landscapes, etc., cannot be reproduced.

With respect to the above-mentioned problem (1), for example, JP-3200744B2 discloses a technology wherein the open air color temperature, etc., is detected and the light emitted from the light source of three colors R, G, B is controlled based on the detected color temperature so as to control the color of the light emitted from the indoor illumination device to be approximately the same as the color temperature of the open air natural light. Turning to the problem (2) above, for example, JP-09-81058A1 discloses a technology wherein the illumination environment of an open air natural light including azure sky is captured by a video camera, and the captured illumination distribution is reproduced and displayed on a ceiling, to thereby reproduce, to a certain degree, an open air illumination environment (distribution) having a spatial distribution.

With the technology disclosed in JP-3200744B2, however, since only one kind of color temperature can be set at one time, the illumination environment can be reproduced only when the color of the illumination environment is spatially constant. In other words, it is not possible to reproduce a complex illumination environment with a color distribution which changes spatially, such as an open air natural light. Furthermore, with the technology disclosed in JP-09-81058A1, even though a spatial light distribution of the illumination environment can be expressed as an image, the reproducibility of color is not taken into consideration so that an illumination environment cannot be reproduced with precise color. Moreover, for both of the technologies disclosed in these patent documents, the reproducible illumination environment is limited only to a ceiling above the observer, and a desired illumination environment surrounding the object can not be freely reproduced, making it impossible to precisely reproduce the reflection of surroundings around the object, as mentioned with reference to the problem (3) above.

DISCLOSURE OF THE INVENTION

The present invention has been achieved in view of the above-mentioned problems of the prior art. It is a primary object of the present invention to provide an improved illumination environment reproducing system, which allows a reproduction of an illumination environment with precise color, inclusive of the surrounding environment of an object, and evaluation or capturing of the object by precisely reproducing color so that the object can be observed or captured as if the object is placed under a desired illumination environment.

To this end, a first aspect of the present invention resides in a n illumination environment reproducing system for illuminating an object to be observed by an observer or captured by a capturing device, under a desired illumination environment, comprising:

an illumination environment projecting means including an illumination environment projection device for projecting a light distribution of said illumination environment as an image; and
a diffusion screen arranged to cover at least an upper portion of said object, for illuminating said object by causing a diffusion reflection or diffusion transmission of the illumination environment projected by said illumination environment projection device.

A second aspect of the present invention resides in an illumination environment reproducing system according to the first aspect, wherein:

said diffusion screen covers part of a space including said observer or capturing device side; and
said illumination environment projection device is adapted to project said light distribution of the illumination environment onto said diffusion screen that is situated in said part of the space in which said observer or capturing device is included.

A third aspect of the present invention resides in an illumination environment reproducing system according to the first aspect, wherein:

said diffusion screen has an observation window for allowing said object to be observed by said observer or captured by said capturing device therethrough, from an outer side of said diffusion screen.

A fourth aspect of the present invention resides in an illumination environment reproducing system according to any one of the first to third aspects, wherein:

said diffusion screen is one of (i) a dome-shaped screen having a part-spherical surface, and (ii) a cylindrical screen having a cylindrical surface.

A fifth aspect of the present invention resides in an illumination environment reproducing system according to any one of the first to fourth aspects, wherein:

said diffusion screen has one of (i) a mirror for allowing a regular reflection of the light from said illumination environment projection device, and (ii) a hole for allowing a direct transmission of the light from said illumination environment projection device, without causing a partial diffusion of said light.

A sixth aspect of the present invention resides in an illumination environment reproducing system according to any one of the first to fifth aspects, wherein:

said illumination environment projecting means further includes an image color calibrating means for calibrating the color of said image of the illumination environment to be inputted to said illumination environment projection device, based on a primary color spectral characteristic of said illumination environment projection device, and a spectral reflectance characteristic or a spectral transmittance characteristic of said diffusion screen.

A seventh aspect of the present invention resides in an illumination environment reproducing system according to any one of the first to sixth aspects, wherein:

said illumination environment projecting means includes a plurality of illumination environment projection devices for projecting images of said illumination environment to respectively different regions of said diffusion screen, and a geometry calibrating means for geometry calibration of the images of said illumination environment to be inputted to said plurality of projection devices.

A eighth aspect of the present invention resides in an illumination environment reproducing system according to any one of the first to seventh aspects, wherein:

said illumination environment projection device is adapted to project said image of the illumination environment in at least four primary colors.

A ninth aspect of the present invention resides in an illumination environment reproducing system according to any one of the first to eighth aspects, further comprising:

an illumination environment capturing means for capturing, as an image, the light distribution of the illumination environment at a location which is different from a location in which said object is placed,
said illumination environment projecting means being capable of projecting, as an image, said light distribution of the illumination environment captured by said illumination environment capturing means, onto said diffusion screen.

A tenth aspect of the present invention resides in an illumination environment reproducing system according the ninth aspect, wherein:

said illumination environment capturing means includes a plurality of illumination environment capturing devices for capturing, as respective images, the light distributions of the illumination environment at respective locations which are different from said location in which said object is placed,
said illumination environment projecting means being capable of selecting, from said illumination environment capturing means, one of the illumination environment capturing devices at a desired location, and obtaining through a network the image of the illumination environment captured by the selected illumination environment capturing device, for projecting said image onto the diffusion screen.

An eleventh aspect of the present invention resides in an illumination environment reproducing system for illuminating an object to be observed by an observer or captured by a capturing device, under a desired illumination environment, comprising:

an illumination environment display means arranged to cover at least an upper portion of said object, for displaying, as an image, a light distribution of said illumination environment, to thereby illuminate said object.

A twelfth aspect of the present invention resides in an illumination environment reproducing system according to the eleventh aspect, wherein:

said illumination environment display means covers part of a space including said observer or capturing device.

A thirteenth aspect of the present invention resides in an illumination environment reproducing system according to the eleventh aspect, wherein:

said illumination environment display means has an observation window for allowing said observer or said capturing device to observe or capture said object therethrough, from an outer side of said illumination environment display means.

A fourteenth aspect of the present invention resides in an illumination environment reproducing system according to any one of the eleventh to thirteenth aspects, wherein:

said illumination environment display means is one of (i) a dome-shaped display mean having a part-spherical surface, and (ii) a cylindrical display means having a cylindrical surface.

A fifteenth aspect of the present invention resides in an illumination environment reproducing system according to any one of the eleventh to fourteenth aspects, further comprising:

an illumination environment capturing means for capturing, as an image, the light distribution of the illumination environment at a location which is different from a location in which said object is placed,
said illumination environment display means being capable of displaying, as an image, said light distribution of the illumination environment captured by said illumination environment capturing means, onto said illumination environment display means.

A sixteenth aspect of the present invention resides in an illumination environment reproducing system according to the fifteenth aspect, wherein:

said illumination environment capturing means includes a plurality of illumination environment capturing devices for capturing, as respective images, the light distributions of the illumination environment at respective locations which are different from said location in which said object is placed,
said illumination environment display means being capable of selecting, from said illumination environment capturing means, one of the illumination environment capturing devices at a desired location, and obtaining through a network the image of the illumination environment captured by the selected illumination environment capturing device, for displaying said image on the illumination environment display means.

A seventeenth aspect of the present invention resides in an illumination environment reproducing system according to any one of the ninth, tenth, fifteenth and sixteenth aspects, wherein:

said illumination environment capturing means is capable of capturing the light distribution of said illumination environment as a multi-spectra image of not less than four bands.

An eighteenth aspect of the present invention resides in an illumination environment reproducing system according to any one of the first to seventeenth aspects, further comprising:

a spot illuminating means for directly illuminating said object.

According to the present invention, it is possible to evaluate or capture an object, which is placed at a location remote from the desired illumination environment, by precisely reproducing the desired illumination environment and illuminating the object by the reproduced environment, so as to precisely reproduce the color as if the object is placed under the desired illumination environment.

## BRIEF DESCRIPTION OF THE DRAWINGS

The present invention will be further explained below, with reference to some preferred embodiments shown in the accompanying drawings.

FIG. 1 is a schematic view showing the principle of an illumination environment reproducing system according to a first embodiment of the present invention.

FIG. 2 is a schematic view showing one example of the multi-spectra illumination environment capturing device shown in FIG. 1.

FIG. 3 is a graph showing the spectral transmittance characteristic of the filter provided for the filter turret shown in FIG. 2.

FIG. 4 is a block diagram showing one example of the illumination environment image creation section shown FIG. 1.

FIG. 5 is a graph showing one example of the tone curve characteristic of the multi-spectra iiiumination environment capturing device.

FIGS. 6(a) and 6(b) are schematic views showing one example of the geometrical shape of the typical illumination environment image as defined in the first embodiment of the present invention.

FIG. 7 is a graph showing one example of the shading characteristic in the multi-spectra illumination environment capturing device shown in FIG. 1.

FIG. 8 is a block diagram showing one example of the arrangement of the color and geometry calibration section shown in FIG. 1.

FIG. 9 is a block diagram showing one example of the arrangement of the multi-primary color illumination environment projection device shown in FIG. 1.

FIGS. 10(a) and 10(b) are, respectively, a schematic plan view showing the arrangement of the rotary filter shown in FIG. 2, and a graph showing the spectral transmittance characteristic thereof.

FIG. 11 is a schematic view showing the illumination environment reproducing system according to a second embodiment of the present invention.

FIG. 12 is a schematic view showing the major part of the illumination environment reproducing system according to a third embodiment of the present invention.

FIG. 13 is a schematic view showing a modification of the third embodiment of the present invention.

FIGS. 14(a) and 14(b) are schematic views showing the illumination environment reproducing system according to a fourth embodiment of the present invention.

FIG. 15 is a schematic view showing the illumination environment reproducing system according to a fifth embodiment of the present invention.

FIG. 16 is a schematic view showing another example of the screen applicable to in the present invention.

FIG. 17 is a schematic view showing a further modification of the present invention, wherein the illumination environment is captured by using a fisheye lens.

FIGS. 18 and 19 are schematic views showing further modifications of the present invention.

## DETAILED DESCRIPTION OF THE PREFERRED EMBODIMENTS

(First Embodiment)

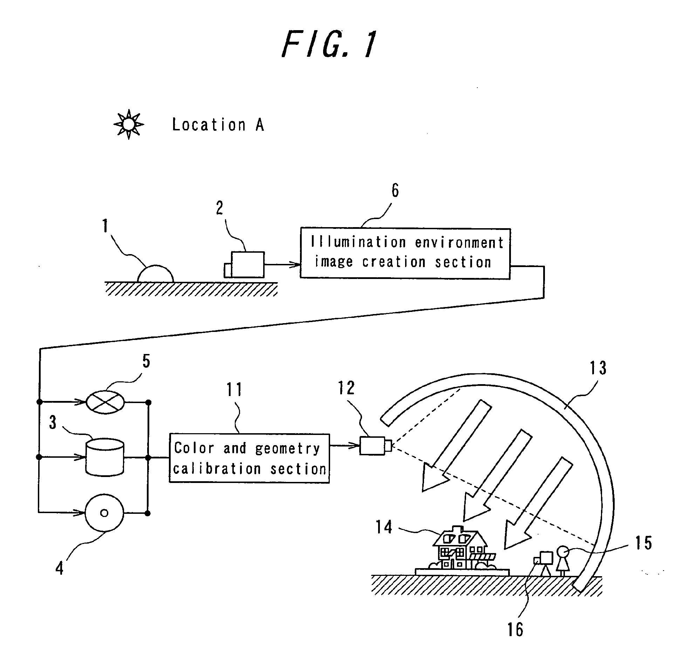

A first embodiment of the illumination environment reproducing system according to the present invention is shown in FIGS. 1 to 10. As particularly shown in FIG. 1, the illumination environment reproducing system of the first embodiment includes a convex mirror 1 for reflecting the light distribution of the illumination from the zenith to the surrounding celestial horizon, a multi-spectra illumination environment capturing device 2 for capturing, as a multi-spectra image, the light distribution of the illumination environment reflected by the convex mirror, and an illumination environment image creation section 6 for performing a geometry calibration and a spectral responsivity calibration with respect to the captured multi-spectra image in order to obtain a spectral image of the illumination environment, based on the geometry characteristic and the spectral responsivity of the capturing device 2, and for storing the thus obtained spectral image of the illumination environment to a database 3 or a record media 4, or transmitting such spectral image to a network 5. Also included in the illumination environment reproducing system is a color and geometry calibration section 11 for performing a geometry calibration and a color calibration with respect to the spectral image of the illumination environment, which has been inputted from the database 3, record media 4 or network 5, based on the geometry characteristic and the spectral responsivity of the of the multi-primary color illumination environment projection device 12 and a dome-shaped reflection screen 13 to be described hereinafter, so as to create a primary color image to be inputted to the multi-primary color illumination environment projection device 12. The multi-primary color illumination environment projection device 12 is inputted with the primary color image from the color and geometry calibration section 11, for projecting the image of the illumination environment onto the reflection screen 13. The reflection screen 13, in turn, serves to reflect and diffuse the projected illumination environment image to irradiate an object 14 (for example, a building or its model).

Here, the convex mirror 1, the multi-spectra illumination environment capturing device 2 and the illumination environment image creation section 6 as a whole constitute an illumination environment capturing means, while the color and geometry calibration section 11 and the multi-primary color illumination environment projection device 12 as a whole constitute an illumination environment projecting means.

The dome-shaped reflection screen 13 is arranged to cover the upper portion of the object 14 and the space from the object 14 toward the side of the observer 15 or capturing device 13 such that, when the object 14 is observed by the observer 15 or captured by the capturing device 16, the image of the illumination environment projected on to the dome-shaped reflection screen 13 can be seen as being reflected at the object 14. Furthermore, as the dome-shaped reflection screen, it is preferred to use a silver screen having some degree of directivity, or a gray screen having a relatively low reflectance (e.g., a reflectance of not greater than 50%), so that the light reflected by the screen is directed mainly toward the object 14 only, without being incident onto the screen itself once again.

In this way, according to the illustrated embodiment, the light distribution of the illumination environment at a location A is captured by the multi-spectra illumination environment capturing device 2 and projected onto the dome-shaped reflection screen 13 with precise colors so as to illuminate the object 14, thereby precisely reproducing indoors the same illumination environment which provides an impression as if the object 14 were placed under the environment at the location A, including the reflection at the object 14.

The above-mentioned sections of the illumination environment reproducing system according to the first embodiment will be individually described below in further detail.

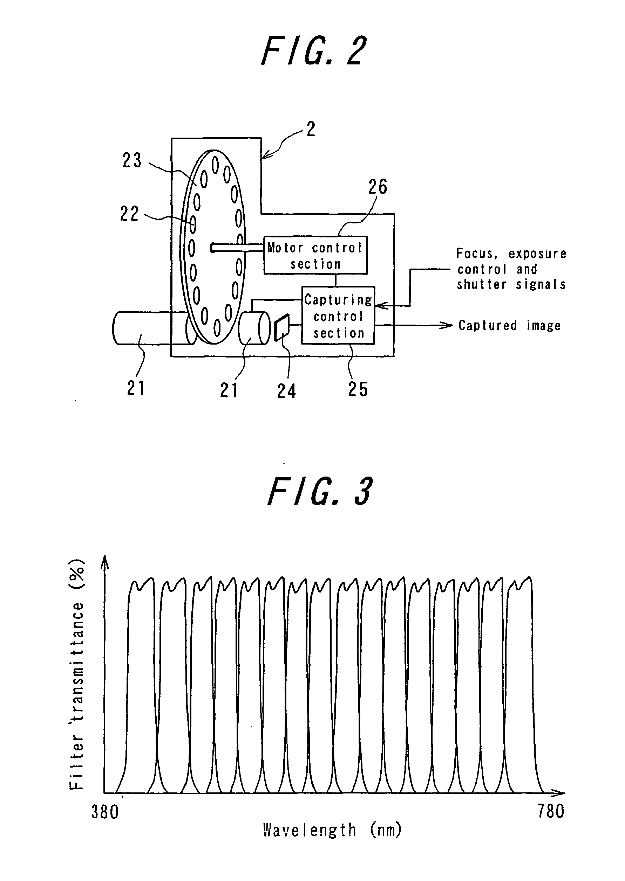

FIG. 2 is a schematic view showing one example of the multi-spectra illumination environment capturing device 2 shown in FIG. 1. The multi-spectra illumination environment capturing device 2 includes an imaging lens 21 for receiving the reflected light of the illumination environment from the convex mirror 1 shown in FIG. 1, a filter turret 23 for holding a plurality of filters 22 (sixteen in number in the illustrated embodiment) which are arranged on a same circle, and modulating the spectral characteristic of the light by successively placing each of the filters 22 in the optical path of the imaging lens 21, a capturing element 24, such as CCD, CMOS or the like, arranged at the image forming position of the imaging lens 21, for capturing the reflected light of the illumination environment as an image signal, a capturing control section 25 for performing the focus control of the imaging lens 21 and the shutter control and the exposure control upon capturing the image signal by the capturing element 24, and a motor control section 26 for rotating the filter turret 23 synchronously with the capturing by the capturing element 24, so as to successively position the plurality of filters 22 in the optical path of the imaging lens 21.

As shown in FIG. 3, each filter 22 held by the filter turret 23 comprises a multi-layer film filter having a narrow wavelength selectivity (spectral transmittance) of mutually different band. Thus, it is possible to obtain a multi-band spectral information (multi-spectra image). Since the plurality of filters 22 may be different in thickness with each other, they are arranged in the optical path of the imaging lens 21 as shown in FIG. 2, so that the light from any point at the location A is incident on the filter surface substantially perpendicularly, to thereby suppress variation of magnification or positional shifting of the image.

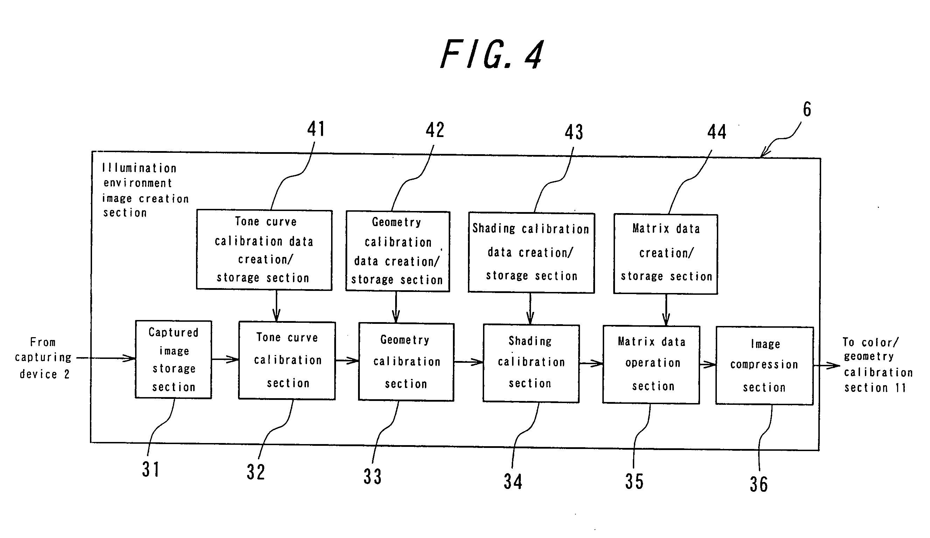

As explained above, FIG. 4 is a block diagram showing one example of the illumination environment image creation section shown FIG. 1. At the illumination environment image creation section 6, the multi-spectra image of the illumination environment as captured by the multi-spectra illumination environment capturing device 2 is stored in the captured image storage section 31. The stored multi-spectra image is successively subjected to calibrations at a tone curve calibration section 32, a geometry calibration section 33, a shading calibration section 34, and a matrix data operation section 35, based on the tone curve characteristic of the capturing device 2, the geometrical characteristics of the capturing device 2 (position, orientation, image angle, distortion of the lens), the shading characteristic and the sensitivity characteristics (spectral sensitivity characteristic, exposure conditions, statistical information of the illumination light spectrum), respectively, so as to obtain spectrographic images. Furthermore, the spectrographic images are outputted to the color/geometry calibration section 11 through the database 3, record media 4 or network 5, after having been compressed at the image compression section 36 based on the correlation between the spectrographic images, or by performing a principal component expansion of the statistical spectral information of the illumination light for the capturing device 2.

Incidentally, the tone curve characteristic, the geometrical characteristics, the shading characteristic and the sensitivity characteristics of the capturing device 2 are imputed, in advance, to a tone curve calibration data creation/storage section 41, a geometry calibration data creation/storage section 42, a shading calibration data creation/storage section 43, and a matrix data creation/storage section 44, respectively, so as to create and store the respective calibration data. In this way, it is possible to perform a real time calibration of the images inputted from the multi-spectra illumination environment capturing device, at the tone curve calibration section 32, geometry calibration section 33, shading calibration section 34, and matrix data operation section 35, by referring to the respective calibration data, and output the calibrated image.

More detailed functions of the tone curve calibration section 32, geometry calibration section 33, shading calibration section 34, and matrix data operation section 35 will be explained below.

The tone curve calibration section 32 performs calibration of the image of each band inputted from the multi-spectra illumination environment capturing device 2, based on the tone curve characteristics (characteristics of input and output signals) of the capturing device 2.

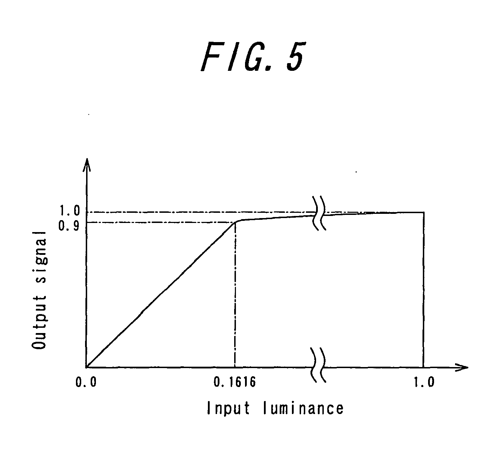

As explained above, FIG. 5 is a graph showing one example of the tone curve characteristic of the multi-spectra illumination environment capturing device 2. Here, up to the input luminance (0.1616) which is one sixth (1/6) of the maximum luminance (1.0) inputted to the capturing device, the output signal is substantially proportional to the input luminance. For a further higher input luminance, the output signal is designed to increase less steeply, with reference to a rapid increase in the input luminance. In this way, even when an illumination light is captured, which is significantly high in luminance as compared to the surrounding azure sky, like an outdoor sunlight, it is possible to acquire the luminance information without losing accuracy as an output signal.

Defining the tone curve characteristic shown in FIG. 5 as $C_k = \rho_k (E_k)$, where $E_k$ is the input luminance of the $k^{th}$ band, and $C_k$ is the output signal of the $k^{th}$ band, an image output signal is obtained at the tone curve calibration section 32, which is linear (directly proportional) to the input luminance by a transformation of the image signal as expressed by the equation (1):

$$D_k = \rho_k^{-1}(C_k) \qquad \cdots\cdots (1)$$

where, Dk is the signal after calibration, and the power minus one (-1) of $\rho_k$ denotes the inverse function.

At the geometry calibration section 33, the geometrical shape of the image, which changes depending upon the position (spatial relationship with the convex mirror 1), orientation, image angle, distortion of the lens, etc., of the multi-spectra illumination environment capturing device 2 is calibrated into a previously defined, standard geometrical shape.

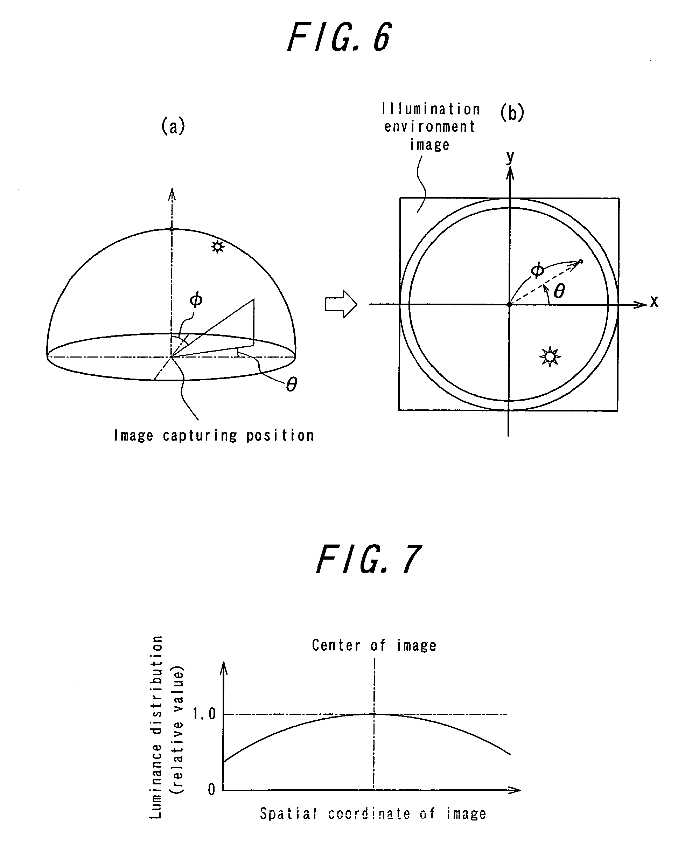

As explained above, the FIGS. 6(a) and 6(b) are schematic views showing one example of the geometrical shape of the typical illumination environment image as defined in the first embodiment of the present invention. In this embodiment, an actual illumination environment expressed by a three-dimensional spherical surface as shown in FIG. 6(a) is transformed into a two dimensional image, which is obtained by an isometric projection of a semi-spherical plane with the zenith as its center, so as to define the illumination environment image. In this instance, from a practical viewpoint, it is difficult to obtain the image having a shape shown in FIG. 6(b) directly from the multi-spectra illumination environment capturing device 2. Thus, positional calibration of each pixel is performed at the geometry calibrating section 33 based on the distortion of the lens at the capturing device 2 and the geometrical characteristic of the capturing environment, so as to calibrate and obtain the illumination environment having a standard geometrical shape as shown in FIG. 6(b).

At the shading calibration section 34, the shading characteristic of the captured image arising from the lens of the capturing device 2 is calibrated.

As explained above, FIG. 7 shows one example of the shading characteristic of the capturing device. It can be appreciated that, in a general capturing device, the light luminance of the image captured by the capturing device decreases toward the periphery of the image, as compared to the actual light luminance. Thus, according to the illustrated embodiment, the shading calibration section 34 serves to perform calibration by subtracting such characteristic is from the image signal, so as to obtain a luminance distribution which is the same as the actual luminance distribution within the entire image.

In this instance, for example, when an illumination environment having a spectral distribution E ($\lambda$) (where $\lambda$ is the wavelength (nm)) is captured by the multi-spectra illumination environment capturing device 2, the value $D_k$ (where

k = 1~M, and M is the number of bands) of the image signal (one pixel) obtained for the $k^{th}$ band of the multi-spectra image can be expressed, by using the spectral sensitivity characteristic $S_k(\lambda)$ of the multi-spectra illumination environment capturing device 2, as equation (2) below.

$$D_k = \int_{380}^{780} E(\lambda) S_k(\lambda) d\lambda \quad \cdots (2)$$

The equation (2) can be rewritten in terms of a matrix, as shown by equation (3) below:

$$D = HE \quad \cdots (3)$$

where,

$$D = [D_1, D_2, ..., D_M] \quad \cdots (4)$$

$$E = [E(380), E(381), ..., E(780)] \quad \cdots (5)$$

and

$$H = \begin{bmatrix} S_1(380) & S_1(381) & \cdots & S_1(780) \\ S_2(380) & S_2(381) & \cdots & S_2(780) \\ \vdots & \vdots & \ddots & \vdots \\ S_M(380) & S_M(381) & \cdots & S_M(780) \end{bmatrix} \quad \cdots (6)$$

In view of the above, from the pixel signal D of the multi-spectra images, the spectral distribution E of the illumination environment can be determined from equation (7) below:

$$E = H^{-1}D \quad \cdots (7)$$

where, $H^{-1}$ denotes a generalized inverse matrix of H.

The generalized inverse matrix $H^{-1}$ can be obtained from the matrix H, by using the Winner estimation method or the like. In this instance, if the statistical information of the of the spectrum of the illumination light is stored by the matrix data creation/ storage section 44 shown in FIG. 4, the statistical information may be used to carry out the Winner estimation method with higher accuracy.

Matrix operation can be performed with respect to all the pixels of the image captured by the multi-spectra illumination environment capturing device 2, using the matrix obtained from the equation (6), to obtain the spectral image of the illumination environment.

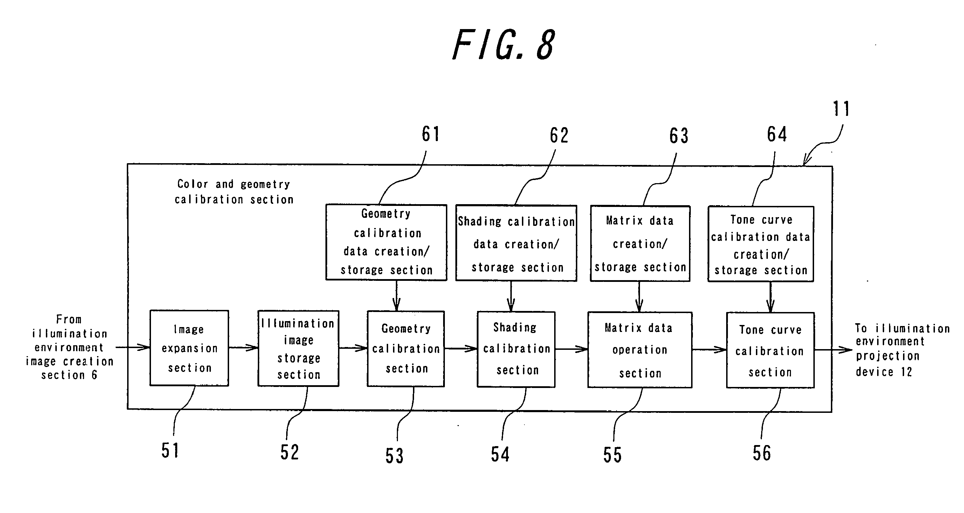

As explained above, FIG. 8 is a block diagram showing one example of the arrangement of the color and geometry calibration section 11 shown in FIG. 1. The color and geometry calibration section 11 includes an illumination image storage section 52 which serves to store the spectral images of the illumination environment created at the illumination environment image creation section 6, after expansion at an image expansion section 51 if they are in a compressed form. The stored spectral images are successively calibrated at a geometry calibrating section 53, a shading calibration section 54, a matrix data operation section 55, and a tone curve calibration section 56, based respectively on the geometrical characteristics (the projection position, direction, image angle, screen shape, etc.) of the multi-primary color illumination environment projection device 12 and the dome-shaped reflection screen 13, the shading characteristics, spectral characteristics (each primary color spectrum of the projection device 12, the spectral reflectance of the screen, etc.), and the tone curve characteristics, and then outputted to the multi-primary color illumination environment projection device 12.

Incidentally, the geometrical characteristics of the multi-primary color illumination environment projection device 12 and the dome-shaped reflection screen 13, the shading characteristics, spectral characteristics and the tone curve characteristics are previously inputted, respectively, to a geometry calibration data creation/storage section 61, a shading calibration data creation/storage section 62, a matrix data creation/storage section 64 and a tone curve calibration data creation/storage section 64, so as to create and store the respective calibration data.

Here, the geometry calibration section 53 performs the geometry calibration of the spectral images based on the geometrical characteristics (the projection position, direction, image angle, screen shape, etc.) of the multi-primary color illumination environment projection device 12 and the dome-shaped reflection screen 13, so as to eliminate distortion that may be caused in the projected image as it is projected from the multi-primary color illumination environment projection device 12 onto the dome-shaped reflection screen 13.

The shading calibration section 54 performs the calibration of the spectral image based on the shading characteristics, i.e., the lens characteristics of the multi-primary color illumination environment projection device 12 or the directional characteristic of the dome-shaped reflection screen 13, so that the luminance becomes uniform within an image projected onto the reflection screen 13.

It is highly important to ensure that the spectral characteristics of the illumination environment displayed as spectral images projected by the multi-primary color illumination environment projection device 12 onto the dome-shaped reflection screen 13 are reproduced as accurately as possible. To this end, the matrix data operation section 55 serves to transform the inputted spectral images into the values of each primary color component to be inputted to the projection device 12. A detailed explanation of the method for transforming into the multi-primary color components is omitted for the sake of simplicity, since spectral light distribution can be reproduced accurately and transformed into the multi-primary color components by known methods, such as that disclosed in JP2003-141518A.

The tone curve calibration section 56 serves to calibrate the tone level of the inputted image signal based on the tone curve characteristics (characteristics of the input and output signals) of each primary color of the multi-primary color illumination environment projection device 12.

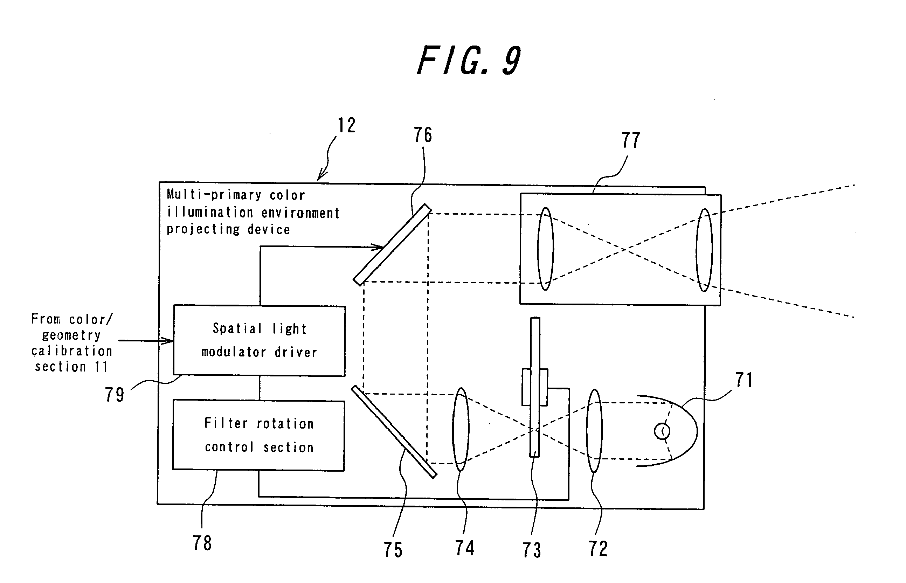

As explained above, FIG. 9 is a block diagram showing one example of the arrangement of the multi-primary color illumination environment projection device 12 shown in FIG. 1. As in the conventional single panel type DLP® projector, the multi-primary color illumination environment projection device 12 includes a light source 71, a condenser lens 72, a rotary filter 73, a collimator lens 74, a mirror 75, a spatial light modulator 76 in the form of a DMD (digital micromirror device), a projection lens 77, a filter rotation control section 78 and a driver 79 for the spatial light modulator 76. Based on the multi-primary color displayed image from the color and geometry calibration section 11, the driver 79 controls the spatial light modulator 76, while the filter rotation control section 78 controls the rotary filter 73, so that the spectral characteristics of the light from the light source 71 is changed by a frame sequential method and the light, of which the spectral characteristic has been changed, is spatially modulated by the DMD 76 and then projected onto the dome-shaped reflection screen 13.

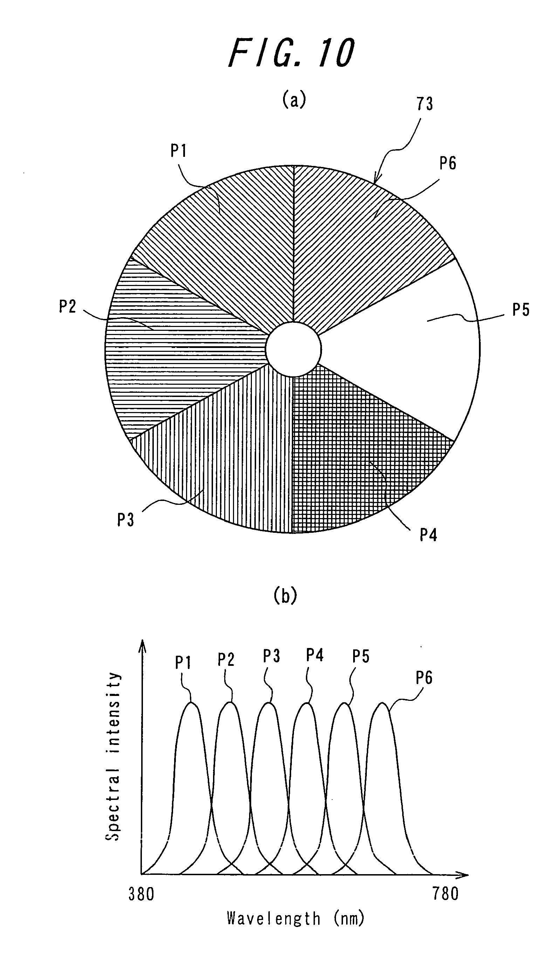

In order to highly accurately reproduce the spectral distribution of the illumination environment, the rotary filter 73 uses six filters P1~P6 having mutually different spectral transmittance characteristics, so as to project six-primary color image instead of the conventional three-primary color image (R, G and B). The arrangement of the six filters P1~P6 is shown in FIG. 10(a), and the spectral transmittance characteristics of these filters are shown in FIG. 10(b).

As explained above, according to the first embodiment of the present invention, the illumination environment at the location A in FIG. 1 is accurately captured by the multi-spectral illumination environment capturing device 2, and the spectral image of the illumination environment is accurately projected from the multi-primary color illumination environment projection device onto the dome-shaped reflection screen 13, so as to illuminate the object 14. Therefore, it is possible to perform a color evaluation of the object 14 even at a location remote from the location A, with the object being observed as if it were placed at the location A. In particular, since the surrounding illumination environment is reproduced by the dome-shaped reflection screen 13, the influences of the reflection or mirror-reflection can be accurately reproduced and observed. Furthermore, since the image captured by the multi-spectral illumination environment capturing device 2 is used at the illumination environment image creating section 6, as the basis for creating spectral image with standard characteristics, inclusive of the spectral characteristics and geometrical characteristics, the created data can be stored in a database or the like, as an archive with the general contents of illumination environments at various locations. Thus, for example, illumination environment database at various locations worldwide may be widely distributed to the general public.

(Second Embodiment)

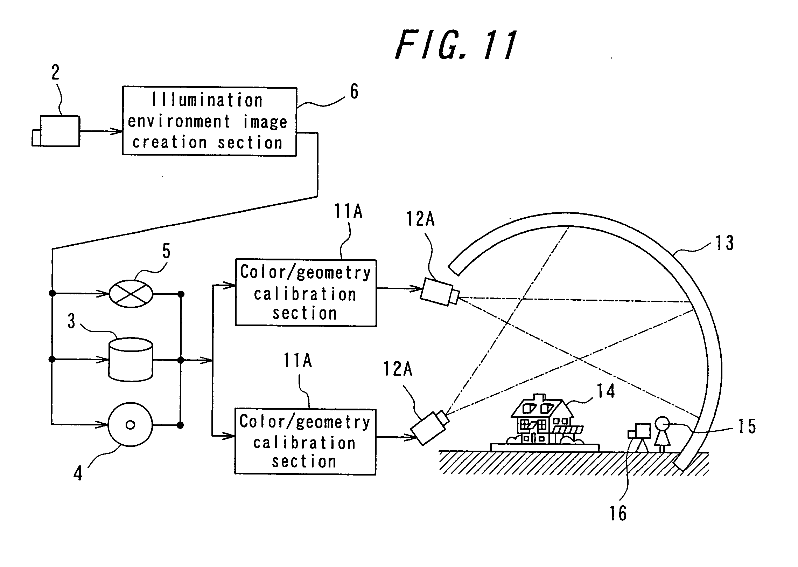

An illumination environment reproducing system according to the second embodiment of the present invention will be explained below with reference to FIG. 11. The second embodiment differs from the first embodiment in that two sets of color and geometry calibration sections 11A, 11B and two sets of multi-primary color illumination environment projection devices 12A, 12B are provided. In this instance, multi-spectrum spectral images from the illumination environment image creating section 6 are subjected to calibration at the two color and geometry calibration sections 11A, 11B. Subsequently, the illumination environment image outputted from the color and geometry calibration section 11A is projected by the multi-primary color illumination environment projection device 12A, onto a first projection region of the dome-shaped reflection screen 13, and the illumination environment image outputted from the other color and geometry calibration section 11B is projected by the other multi-primary color illumination environment projection device 12B, onto a second projection region of the dome-shaped reflection screen 13, which overlaps partly with the first projection region, so as to reproduce a single illumination environment image on the dome-shaped reflection screen 13.

Therefore, the color and geometry calibration section 11A is assigned with the characteristic information of the corresponding multi-primary color illumination environment projection device 12A, i.e., the geometrical characteristics (projection position, direction, image angle), shading characteristics, primary color spectra, tone curve characteristic, etc., and the other color and geometry calibration section 11B is similarly assigned with the characteristic information of the corresponding multi-primary color illumination environment projection device 12B, so as to calibrate the differences in geometry characteristics and color characteristics between the two sets of multi-primary color illumination environment projection devices 12A, 12B and thereby project a single illumination environment image on the dome-shaped reflection screen 13 in a seamless manner. In other respects, the second embodiment is similar to the first embodiment in terms of constitution and function.

According to the second embodiment of the present invention, since two sets of multi-primary color illumination environment projection devices 12A, 12B are used to project the illumination environment image, it is possible to reproduce the illumination environment image with higher resolution as compared to the first embodiment. It is thus possible to reproduce the reflection at the object 14 with higher resolution, thereby allowing the object 14 to be evaluated more accurately.

(Third Embodiment)

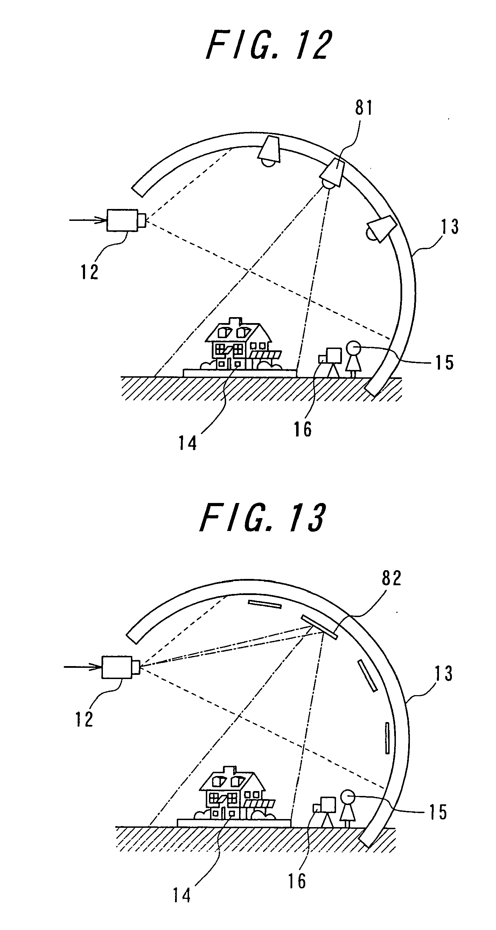

An illumination environment reproducing system according to the third embodiment of the present invention will be explained below with reference to FIG. 12, which shows the major part of the system. This embodiment differs from the first or second embodiment in that at least one spot light source 81 is arranged in the dome-shaped reflection screen 13. As the spot light source 81, there may be used an artificial sunlight source or such a light source which can designate and adjust the color temperature of the illumination light, for example, from a red-tinged illumination light of 3,000K to a blue-tinged illumination light of 9,000K. The spot light sources 81 are arranged so that the illumination light directly irradiates the object 14 without being incident on the dome-shaped reflection screen 13. There may be arranged a single spot light source 81 at a desired position of the dome-shaped reflection screen 13. Alternatively, a plurality of spot light sources 81 (three in number in the arrangement shown in FIG. 12) may be arranged at different positions of the dome-shaped reflection screen 13, corresponding to different hourly positions of the sun.

In this instance, the provision of the spot light sources 81 in the dome-shaped reflection screen makes it possible to illuminate the object 14 with the direct illumination light from the spot light source 81, in addition to the diffusion reflection light by the dome-shaped reflection screen 13. Since the object 14 can be illuminated by the spot light source 81 with high luminance, for example, it is possible to accurately reproduce the illumination environment with extremely wide dynamic range, such as an outdoor illumination in a sunshiny day, for illuminating the object 14.

Incidentally, as shown in FIG. 13, instead of the spot light sources 81, the dome-shaped reflection screen 13 may be provided with one or more mirrors 82 (four in number in FIG. 13), which are arranged so as to reflect the incident light from the multi-primary color illumination environment projection device 12 to thereby illuminate the object 14. The mirror 82 may be arranged so that its mounting angle can be adjusted for allowing the regular reflection light of the incident light from the multi-primary color illumination environment projection device 12 is oriented toward the object 14.

In this variant also, the regular reflection light from the mirror 82 is very high in luminance than the diffusion reflection light by the dome-shaped reflection screen 13, so that the illumination environment with extremely wide dynamic range, such as an outdoor illumination in a sunshiny day, can be accurately reproduced for illuminating the object 14, as in the embodiment shown in FIG. 12.

(Fourth Embodiment)

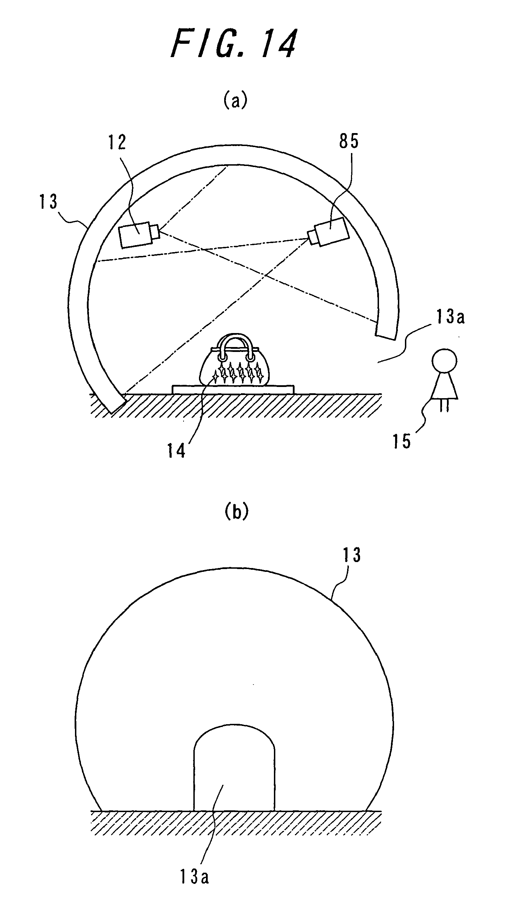

An illumination environment reproducing system according to the fourth embodiment of the present invention will be explained below with reference to FIGS. 14(a) and 14(b), which are schematic sectional view and front view of the dome-shaped reflection screen, respectively. This embodiment differs from the previous embodiments in that the dome-shaped reflection screen is arranged to cover the back side of the object 14 (illustrated here as a bag), and a background image upon observing the object 14 is projected by a background image projection device 85 onto a screen surface region on the back side of the object 14, so as to allow observation of the object 14 from an outer side of the dome-shaped reflection screen 13 through an observation window 13a.

In this way, according to the fourth embodiment of the present invention, since the background image behind the object 14 can be reproduced, upon observation of the object 14 under a desired illumination environment, it is possible to reproduce an accurate appearance of the color of the object 14, taking into account the color acclimation state of the observer 15 under the presence of the background image. Furthermore, since the dome-shaped reflection screen is provided with the observation window 13a for allowing the observer 15 to observe the object 14 from an outer side of the dome, it is possible to embody an illumination environment reproducing system including a dome-shaped reflection screen which is much smaller than the body of the observer 15. Incidentally, while the screen for displaying the projected background image is illustrated as being dome-shaped to have a spherical surface, there may be used a flat screen instead of a spherical screen.

(Fifth Embodiment)

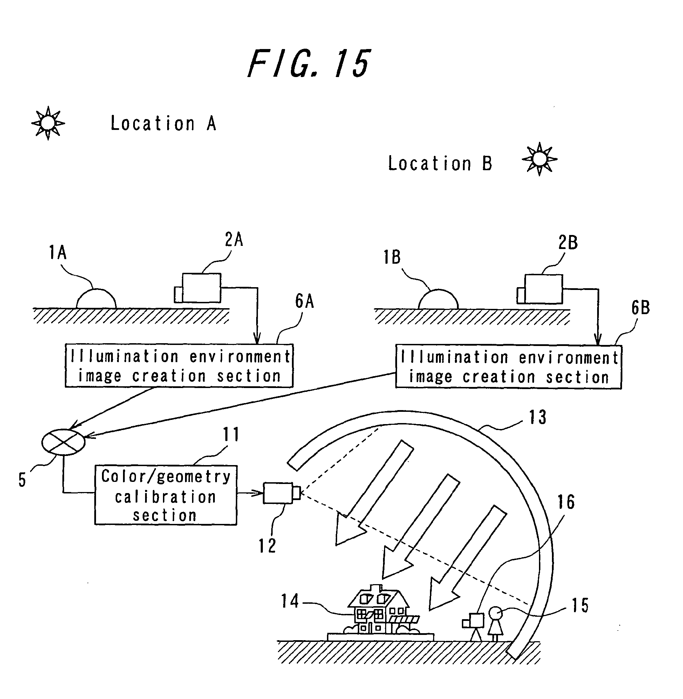

An illumination environment reproducing system according to the fifth embodiment of the present invention will be explained below with reference to FIG. 15. This embodiment has a unique arrangement wherein, among a plurality of locations having mutually different illumination environments, such as two locations A and B, one desired location can be selected on the part of the illumination environment projection means, i.e., on the side of the observer 15. The light distribution of the illumination environment at the selected location is obtained through a network 5. The so-obtained light distribution is projected onto the dome-shaped reflection screen 13 as in the previous embodiments, so as to illuminate the object 14 while reproducing the illumination environment at the selected location.

To this end, according to the fifth embodiment, at the location A, the light distribution of the illumination environment is captured, as a multi-spectral image, by the multi-spectral illumination environment capturing device 2A, through the convex mirror 1A, and the captured multi-spectral image is calibrated at the illumination environment image creating section 6A based on the characteristic information of the capturing device 2A, and the calibrated data is transmitted to the network 5 as a spectral image of the illumination environment. Similarly, at the location B, the light distribution of the illumination environment is captured, as a multi-spectral image, by the multi-spectral illumination environment capturing device 2B, through the convex mirror 1B, and the captured multi-spectral image is calibrated at the illumination environment image creating section 6B based on the characteristic information of the capturing device 2B, and the calibrated data is transmitted to the network 5 as a spectral image of the illumination environment.

In this way, with respect to a plurality of locations having mutually different illumination environments, it is possible to create spectral images of the respective illumination environments, to select a desired location and obtain through the network 5 the spectral image of the illumination environment at the selected location, to project the so-obtained spectral image of the illumination environment onto the dome-shaped reflection screen 13, and to illuminate the object 14 by selectively reproducing different illumination environments with a single dome-shaped reflection screen 13. Thus, for example, it is possible to designate the illumination environment locations as the northern and southern hemispheres of the earth, and observe or capture the object 14 while successively reproducing the illumination environments for summer season and winter season. Also, the difference in the appearance of color of the object depending upon the difference in the illumination environment can be compared and checked very easily.

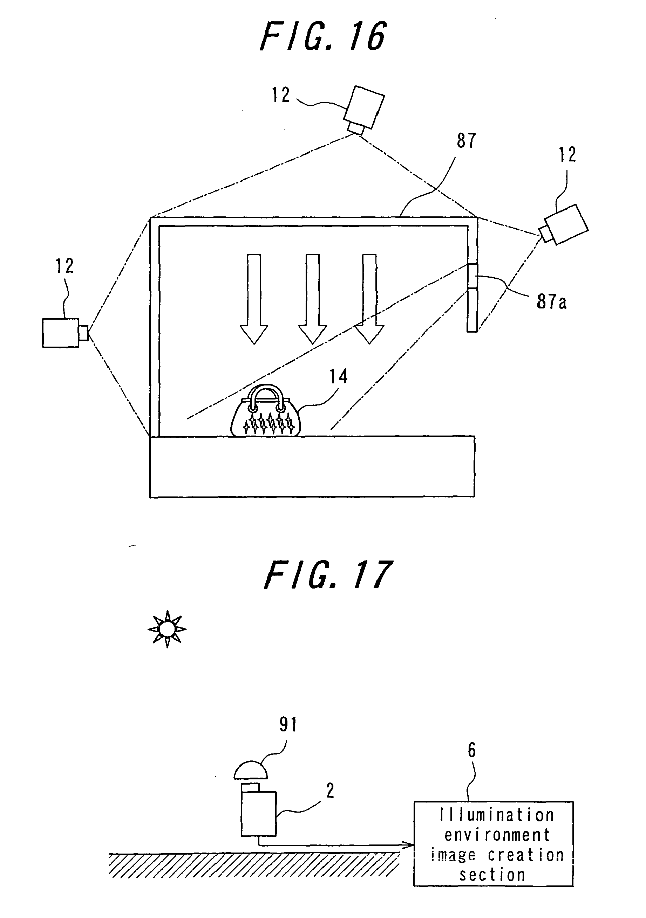

It is needless to mention that the present invention is not limited to the above-described specific embodiments, and various modifications or changes are possible. For example, while a dome-shaped reflection screen is used in the illustrated embodiments for the diffusion illumination of the object 14, the shape of the reflection screen is not limited to a dome, and there may be used screen with a different shape, such as a box-shaped screen. Furthermore, the screen is not limited to a reflection screen, and there may be used a box-shaped transmission screen 87 as shown in FIG. 16, whereby illumination environments are projected by multi-primary color illumination environment projecting devices 12 from back sides of the respective walls of the box, and transmitted through the walls and diffused to illuminate the object 14 to provide similar effects as the reflection screen. When a transmission screen is used, as shown in FIG. 16, for example, as least one hole may be formed in the wall of the transmission screen 87, so that the projected light from the multi-primary color illumination environment projecting device 12 is partly incident on the object 14 directly, without causing diffusion, to provide similar effects as the mirror 82 explained with reference to FIG. 13.

The primary colors of the image projected onto the screen by the multi-primary color illumination environment projecting device 12 is not limited to the six primary colors, and there may be used four, five, seven or more primary colors. In this connection, the spectral characteristics of the illumination environment can be reproduced with higher definition by increasing the number of the primary colors. On the other hand, the cost of the projection device can be reduced if the conventional three primary colors are used. The multi-primary color image may be projected onto the screen without using the rotary filter 73 as shown in FIG. 9, by using a plurality of projection devices having mutually different spectral characteristics of the primary colors, such that the projected images are partly overlapping with each other. Furthermore, the spatial light modulator constituting the multi-primary color illumination environment projecting device 12 is not limited to the DMD, and there may be used a reflection-type liquid crystal device or transmission-type crystal liquid device.

In the above-mentioned embodiments, the multi-spectral image of the illumination environment is obtained by using the reflection light from the convex mirror 1. However, instead of the convex mirror 1, the multi-spectral image of the illumination environment may be obtained by using a fisheye lens 91, as shown in FIG. 17, or by changing the capturing direction of a single multi-spectral illumination environment capturing device, thereby dividing an omni-directional illumination environment into a plurality of multi-spectral images.

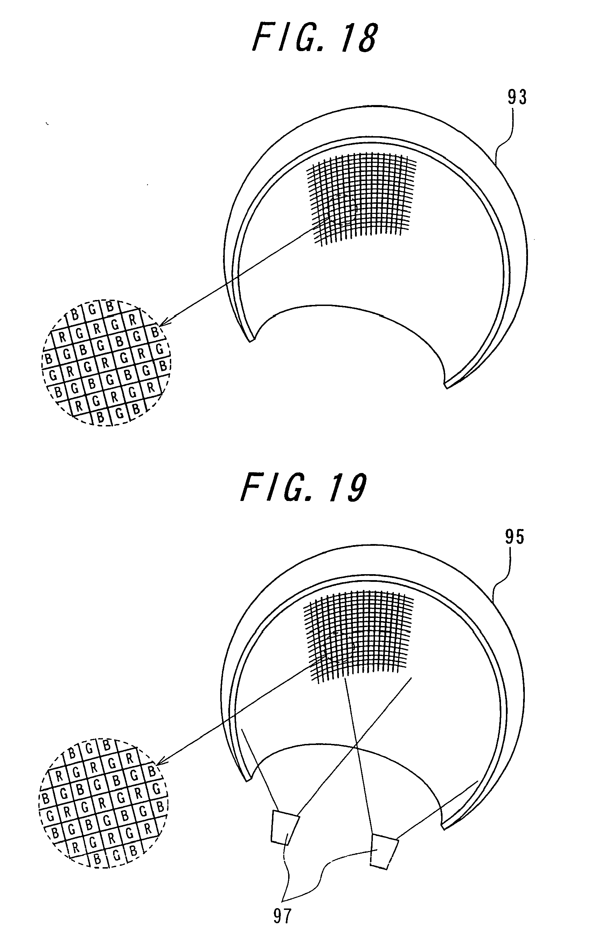

Moreover, instead of illuminating an object by displaying an image on a screen by means of a projection device, it is possible to constitute the illumination environment display means by an image display panel 93 as shown in FIG. 18, wherein self-luminous elements, such as LEDs or Els, as combined with filters, if necessary, are arranged for allowing a display of multi-primary color images (three primary colors of R, G, B in FIG. 18), and to illuminate the object by displaying the light distribution, as an image, of the desired illumination environment on the image display panel 93. Alternatively, it is also possible to constitute the illumination environment display means by an image display panel 95 in combination with an illumination light source 97, wherein the image display panel 95 includes a number of electronic ink micro-capsules combined with multi-primary color filters (three primary color filters for R, G, B) are deployed for allowing a display of multi-primary color images, and to illuminate the object by displaying the light distribution, as an image, of the desired illumination environment on the image display panel 95, while illuminating the panel 95 by the illumination light source 97.

Finally, the object is not limited to the illustrated building or its model, or a bag. Thus, the object may be clothes, adornments, automobiles, furniture, artistic objects, paintings, human skin, teeth, etc., to provide similar effects.

**Claims**

1. An illumination environment reproducing system for illuminating an object to be observed by an observer or captured by a capturing device, under a desired illumination environment, comprising:

    an illumination environment projecting means including an illumination environment projection device for projecting a light distribution of said illumination environment as an image; and
    a diffusion screen arranged to cover at least an upper portion of said object, for illuminating said object by causing a diffusion reflection or diffusion transmission of the illumination environment projected by said illumination environment projection device.

2. The illumination environment reproducing system according to claim 1, wherein:

    said diffusion screen covers part of a space including said observer or capturing device side; and
    said illumination environment projection device is adapted to project said light distribution of the illumination environment onto said diffusion screen that is situated in said part of the space in which said observer or capturing device is included.

3. The illumination environment reproducing system according to claim 1, wherein:

    said diffusion screen has an observation window for allowing said object to be observed by said observer or captured by said capturing device therethrough, from an outer side of said diffusion screen.

4. The illumination environment reproducing system according to any one of claims 1 to 3, wherein:

    said diffusion screen is one of (i) a dome-shaped screen having a part-spherical surface, and (ii) a cylindrical screen having a cylindrical surface.

5. The illumination environment reproducing system according to any one of claims 1 to 4, wherein:

    said diffusion screen has one of (i) a mirror for allowing a regular reflection of the light from said illumination environment projection device, and (ii) a hole for allowing a direct transmission of the light from said illumination environment projection device, without causing a partial diffusion of said light.

**6.** The illumination environment reproducing system according to any one of claims 1 to 4, wherein:

said illumination environment projecting means further includes an image color calibrating means for calibrating the color of said image of the illumination environment to be inputted to said illumination environment projection device, based on a primary color spectral characteristic of said illumination environment projection device, and a spectral reflectance characteristic or a spectral transmittance characteristic of said diffusion screen.

**7.** The illumination environment reproducing system according to any one of claims 1 to 6, wherein:

said illumination environment projecting means includes a plurality of illumination environment projection devices for projecting images of said illumination environment to respectively different regions of said diffusion screen, and

a geometry calibrating means for geometry calibration of the images of said illumination environment to be inputted to said plurality of projection devices.

**8.** The illumination environment reproducing system according to any one of claims 1 to 7, wherein:

said illumination environment projection device is adapted to project said image of the illumination environment in at least four primary colors.

**9.** The illumination environment reproducing system according to any one of claims 1 to 8, further comprising:

an illumination environment capturing means for capturing, as an image, the light distribution of the illumination environment at a location which is different from a location in which said object is placed, said illumination environment projecting means being capable of projecting, as an image, said light distribution of the illumination environment captured by said illumination environment capturing means, onto said diffusion screen.

**10.** The illumination environment reproducing system according to claim 9, wherein:

said illumination environment capturing means includes a plurality of illumination environment capturing devices for capturing, as respective images, the light distributions of the illumination environment at respective locations which are different from said location in which said object is placed, said illumination environment projecting means being capable of selecting, from said illumination environment capturing means, one of the illumination environment capturing devices at a desired location, and obtaining through a network the image of the illumination environment captured by the selected illumination environment capturing device, for projecting said image onto the diffusion screen.

**11.** An illumination environment reproducing system for illuminating an object to be observed by an observer or captured by a capturing device, under a desired illumination environment, comprising:

an illumination environment display means arranged to cover at least an upper portion of said object, for displaying, as an image, a light distribution of said illumination environment, to thereby illuminate said object.

**12.** The illumination environment reproducing system according to claim 11, wherein:

said illumination environment display means covers part of a space including said observer or capturing device.

**13.** The illumination environment reproducing system according to claim 11, wherein:

said illumination environment display means has an observation window for allowing said observer or said capturing device to observe or capture said object therethrough, from an outer side of said illumination environment display means.

**14.** The illumination environment reproducing system according to any one of claims 11 to 13, wherein:

said illumination environment display means is one of (i) a dome-shaped display mean having a part-spherical surface, and (ii) a cylindrical display means having a cylindrical surface.

**15.** The illumination environment reproducing system according to any one of claims 11 to 14, further comprising:

an illumination environment capturing means for capturing, as an image, the light distribution of the illumination environment at a location which is different from a location in which said object is placed,
said illumination environment display means being capable of displaying, as an image, said light distribution of the illumination environment captured by said illumination environment capturing means, onto said illumination environment display means.

**16.** The illumination environment reproducing system according to claim 15, wherein:

said illumination environment capturing means includes a plurality of illumination environment capturing devices for capturing, as respective images, the light distributions of the illumination environment at respective locations which are different from said location in which said object is placed,
said illumination environment display means being capable of selecting, from said illumination environment capturing means, one of the illumination environment capturing devices at a desired location, and obtaining through a network the image of the illumination environment captured by the selected illumination environment capturing device, for displaying said image on the illumination environment display means.

**17.** The illumination environment reproducing system according to any one of claims 9, 10, 15 and 16, wherein:

said illumination environment capturing means is capable of capturing the light distribution of said illumination environment as a multi-spectra image of not less than four bands.

**18.** The illumination environment reproducing system according to any one of claims 1 to 17, further comprising:

a spot illuminating means for directly illuminating said object.

# FIG. 1

☀ Location A

# FIG. 2

# FIG. 3

# FIG. 4

EP 1 750 428 A2

# FIG. 5

# FIG. 6

(a)

Illumination
environment
image (b)

Image capturing position

# FIG. 7

Center of image

Luminance distribution
(relative value)

1.0

0

Spatial coordinate of image

# FIG. 8

Color and geometry calibration section — 11

- 61 Geometry calibration data creation/ storage section
- 62 Shading calibration data creation/ storage section
- 63 Matrix data creation/ storage section
- 64 Tone curve calibration data creation/ storage section

From illumination environment image creation section 6 →

- 51 Image expansion section
- 52 Illumination image storage section
- 53 Geometry calibration section
- 54 Shading calibration section
- 55 Matrix data operation section
- 56 Tone curve calibration section

→ To illumination environment projection device 12

# FIG. 9

EP 1 750 428 A2

# FIG. 10

## (a)

## (b)

EP 1 750 428 A2

# FIG. 11

# *FIG. 12*

# *FIG. 13*

# FIG. 14

## (a)

## (b)

# FIG. 15

Location A

Location B

1A  2A  6A

1B  2B  6B

Illumination environment
image creation section

Illumination environment
image creation section

13

11

Color/geometry
calibration
section

5

12

16

14

15

# *FIG. 16*

# *FIG. 17*

Illumination environment image creation section

## FIG. 18

## FIG. 19

**REFERENCES CITED IN THE DESCRIPTION**

**Patent documents cited in the description**

- JP 3200744 B
- JP 9081058 A
- JP 2003141518 A